Europäisches Patentamt

**European Patent Office**

Office européen des brevets

(19)

(11) Numéro de publication : **0 045 919**
**B1**

(12) # FASCICULE DE BREVET EUROPÉEN

(45) Date de publication du fascicule du brevet :
07.11.84

(51) Int. Cl.³ : **H 02 K   3/47**

(21) Numéro de dépôt : **81106044.1**

(22) Date de dépôt : **03.08.81**

(54) **Dispositif à dents à queue d'aronde pour fixer les barres d'enroulement statoriques d'une machine électrique tournante.**

(30) Priorité : **07.08.80 FR 8017444**

(43) Date de publication de la demande :
**17.02.82 Bulletin 82/07**

(45) Mention de la délivrance du brevet :
**07.11.84 Bulletin 84/45**

(84) Etats contractants désignés :
**AT BE CH DE FR GB IT LI LU NL SE**

(56) Documents cités :
**DE-A- 2 627 802**
**FR-A- 1 464 588**
**FR-A- 2 167 690**
**FR-A- 2 268 380**
**FR-A- 2 287 798**
**FR-A- 2 324 145**
**FR-A- 2 331 184**
**FR-A- 2 371 808**
**FR-A- 2 432 792**
**US-A- 1 756 672**
**US-A- 3 437 858**

(73) Titulaire : **ALSTHOM-ATLANTIQUE Société anonyme dite:**
**38, Avenue Kléber**
**F-75784 Paris Cedex 16 (FR)**

**ELECTRICITE DE FRANCE Service National**
**2, rue Louis Murat**
**F-75008 Paris (FR)**

(72) Inventeur : **Gillet, Roger**
**24, avenue d'Altkirch**
**F-90000 Belfort (FR)**
Inventeur : **Nithart, Henri**
**12, Bld. Renaud de Bourgogne**
**F-90000 Belfort (FR)**

(74) Mandataire : **Weinmiller, Jürgen et al**
**Zeppelinstrasse 63**
**D-8000 München 80 (DE)**

EP 0 045 919 B1

## Description

La présente invention concerne un dispositif à dents à queue d'aronde pour fixer les barres d'enroulement statoriques d'une machine électrique tournante dont le rotor tourne autour d'un axe « longitudinal », les barres d'enroulement statoriques étant disposées longitudinalement et réparties angulairement, et étant fixées contre la surface intérieure cylindrique du circuit magnétique statorique par l'intermédiaire de dents réparties angulairement. Chacune de ces dents a la forme générale d'un prisme à génératrices longitudinales et comporte

— un pied dont la section présente la forme générale d'un trapèze ayant une grande base et une petite base disposées selon la direction « tangentielle » avec la petite base vers l'intérieur de la machine, deux côtés reliant ces deux bases,

— et un corps s'étendant selon la direction « radiale » à partir de la petite base dudit trapèze.

La dent est accrochée au circuit magnétique statorique par engagement de son pied dans une fente longitudinale dont la section présente une forme correspondant à celle de ce pied et qui est creusée dans la surface interne de ce circuit.

Les barres d'enroulement sont fixées par l'intermédiaire du corps de ces dents qui s'étend radialement vers l'intérieur à partir de la surface interne du circuit magnétique statorique.

On voit que, dans le type de stator sans encoches connu auquel l'invention s'applique les barres, au lieu d'être calées au fond d'encoches creusées dans le circuit magnétique du stator, sont appliquées contre la surface intérieure cylindrique de ce circuit magnétique, et que la fixation de ces barres se fait par un accrochage au circuit magnétique statorique. Divers moyens d'accrochage ont été utilisés tels que des vis ou des queues d'aronde. Le dispositif de fixation prend ainsi appui sur le circuit magnétique pour tirer les barres radialement vers l'extérieur de manière à les appliquer contre la surface intérieure de ce circuit. Etant donné que les moyens d'accrochage pénètrent dans ce circuit pour y prendre appui radialement, le dispositif peut assurer en même temps l'immobilisation tangentielle des barres c'est-à-dire empêcher que leur position angulaire ne varie.

Les dispositifs de fixation connus utilisant un accrochage des barres au circuit magnétique présentent des inconvénients tels que :

— l'encombrement dû à l'utilisation de vis isolantes dont les caractéristiques mécaniques faibles nécessitent un large dimensionnement,

— ou la présence dans l'entrefer de dents d'accrochage métalliques. Le pied de ces dents forme une queue d'aronde engagée dans le circuit magnétique statorique. Les tôles métalliques constituant ces dents ne sont pas magnétiques et sont suffisamment résistantes mécaniquement mais elles sont sujettes à des pertes par effet Joule en raison des fortes inductions magnétiques variables (voir document US-A 3 405 297,

notamment fig. 8).

La présente invention a pour but la réalisation d'un dispositif à dents à queue d'aronde pour fixer les barres d'enroulement statoriques d'une machine électrique tournante en évitant la présence de matériau métallique dans l'entrefer et sans présenter d'encombrement excessif.

Elle a pour objet un dispositif à dents à queue d'aronde pour fixer les barres d'enroulement statoriques d'une machine électrique tournante, dont le rotor tourne autour d'un axe « longitudinal », les barres d'enroulement statoriques étant disposées longitudinalement et réparties angulairement, et étant fixées contre la surface intérieure cylindrique du circuit magnétique statorique par l'intermédiaire de dents réparties angulairement, chacune de ces dents ayant la forme générale d'un prisme à génératrices longitudinales et comportant

— un pied dont la section présente la forme générale d'un trapèze ayant une grande base et une petite base disposées selon la direction « tangentielle » avec la petite base vers l'intérieur de la machine, deux côtés reliant ces deux bases,

— et un corps s'étendant selon la direction « radiale » à partir de la petite base dudit trapèze,

— la dent étant accrochée au circuit magnétique statorique par engagement de son pied dans une fente longitudinale dont la section présente une forme correspondant à celle de ce pied et qui est creusée dans la surface interne de ce circuit,

— les barres d'enroulement étant fixées par l'intermédiaire du corps de ces dents qui s'étend radialement vers l'intérieur à partir de la surface interne du circuit magnétique statorique,

— ce dispositif étant caractérisé par le fait que ces dents comportent chacune

— un noyau s'étendant sur toute l'extension longitudinale de la dent, une partie de ce noyau étant disposée à l'intérieur du pied de la dent et présentant une face de base parallèle et en regard d'une partie médiane de la grande base du pied, et deux faces latérales s'étendant vers le corps de la dent à partir des bords latéraux de cette face de base, en se rapprochant progressivement l'une de l'autre,

— et une enveloppe appliquée sur ce noyau, présentant une épaisseur sensiblement constante, et formant au moins la grande base et les deux côtés du pied et les parois latérales du corps de la dent, cette enveloppe étant constituée d'une superposition de couches de tissu d'armature disposées parallèlement à la direction longitudinale en suivant les faces latérales de la dent, ces couches étant imprégnées d'une résine durcie, de manière à conférer au pied de la dent une résistance importante aux efforts de traction radiale vers l'intérieur, et à conférer à l'ensemble de la dent une résistance importante aux efforts de flexion autour d'axes longitudinaux, la plus grande part de ces efforts étant supportée par cette enveloppe.

A l'aide des figures schématiques ci-jointes, on va décrire ci-après à titre non limitatif, comment l'invention peut être mise en œuvre.

La figure 1 représente une vue partielle schématique d'un dispositif selon l'invention, en coupe par un plan perpendiculaire à l'axe de la machine.

La figure 2 représente une vue en perspective d'une dent longue du dispositif de la figure 1, avec ses deux coins de calage à enfoncement longitudinal.

La figure 3 représente une vue partielle de côté, selon une ligne III-III de la figure 1, de deux dents longues longitudinalement successives du même dispositif, le plan de cette figure étant parallèle à l'axe de la machine.

La figure 4 représente une vue en coupe d'une dent longue du même dispositif, le plan de coupe étant perpendiculaire à l'axe de la machine.

La figure 5 représente un détail V de la figure 4.

La figure 6 est une variante de la figure 1 et représente un dispositif analogue comportant seulement des dents longues.

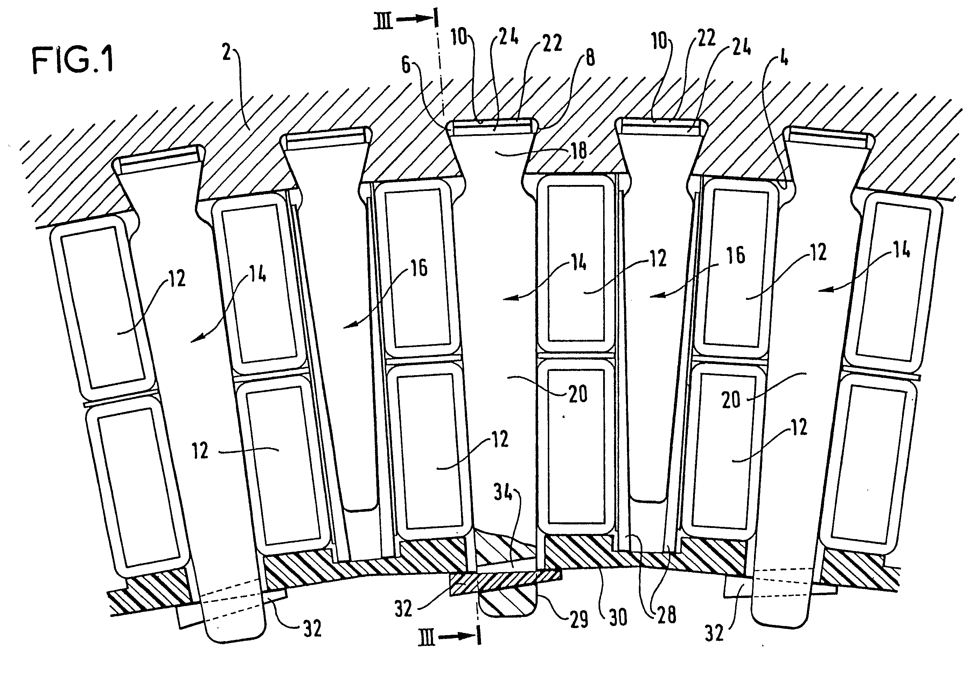

Le dispositif est monté sur le circuit magnétique 2 du stator d'un alternateur de puissance dont le rotor tourne autour d'un axe non visible sur les figures et perpendiculaire au plan de la figure 1. Cet axe est celui de la machine et aussi celui de la surface interne 4 de ce circuit, cette surface étant cylindrique de révolution. C'est par rapport à cet axe que sont définies en chaque point les directions « longitudinale », c'est-à-dire parallèle à cet axe, « radiale » c'est-à-dire coupant cet axe à angle droit, et « tangentielle » c'est-à-dire perpendiculaire à la fois à l'axe et à la direction radiale passant par ce point.

Le circuit magnétique statorique 2 est constitué classiquement de tôles d'acier magnétiques perpendiculaires à l'axe et empilées longitudinalement.

Dans la surface interne de ce circuit ont été creusées des fentes longitudinales 6 à section trapézoïdale, la petite base du trapèze coïncidant sensiblement avec la surface interne 4 du circuit magnétique. Ces fentes sont réparties angulairement de manière régulière. Chacune d'elles présente deux faces latérales 8 et un fond 10. Elles permettent un accrochage classique du type à queue d'aronde.

Des barres d'enroulement 12 sont disposées longitudinalement, et accrochées en appui contre la surface, dans les intervalles entre les fentes 6, grâce au dispositif de fixation qui va être maintenant décrit.

Ce dispositif comporte des dents d'accrochages telles que 14 ou 16 accrochées dans les fentes 6 par engagement longitudinal à partir d'une extrémité du circuit magnétique. Chacune de ces dents présente la forme générale d'un prisme à génératrices longitudinales et comporte :

— un pied 18 dont la section présente la forme générale d'un trapèze ayant une grande base et une petite base disposées selon la direction « tangentielle », et deux côtés reliant ces deux bases,

— et un corps 20 s'étendant selon la direction « radiale » à partir de la petite base du trapèze.

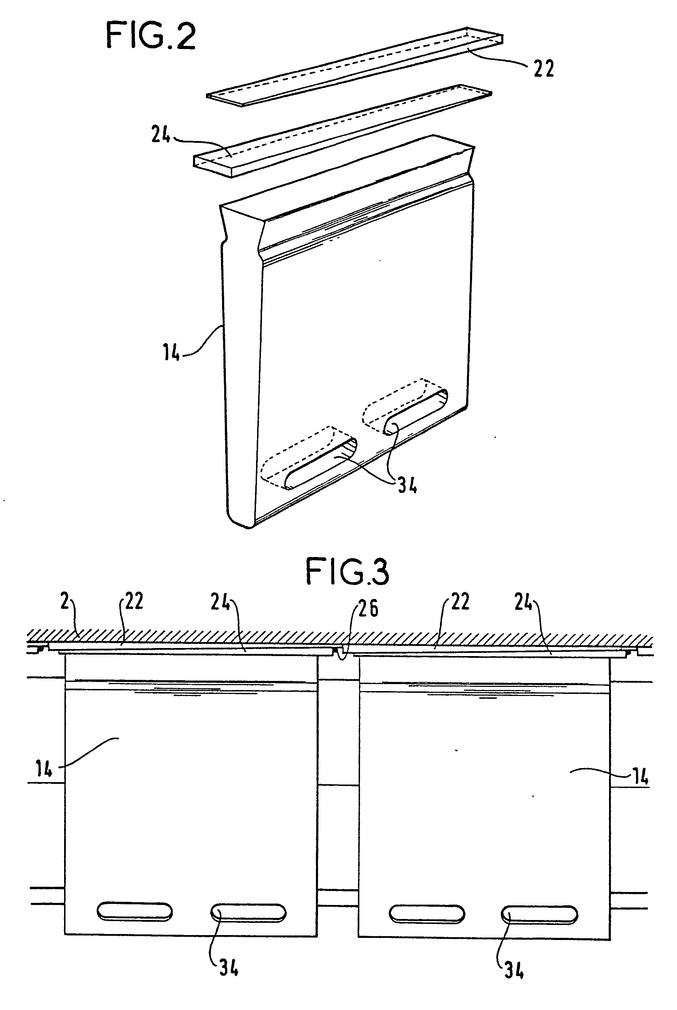

L'accrochage de ces dents résulte de l'engagement de leurs pieds 18 dans les fentes 6. Les corps de ces dents forment saillie radiale vers l'intérieur à partir de la surface interne 4 du circuit magnétique. Pour assurer leur calage, ces dents sont munies de coins de calage radial 22, 24 à enfoncement longitudinal disposés contre la grande base du pied 18 de chaque dent 14 de manière à s'insérer entre cette grande base et le fond 10 de la fente 6 dans laquelle ce pied est engagé, à pousser ce pied radialement vers l'intérieur, et à assurer ainsi une compression tangentielle permanente du pied par appui sur les faces latérales de cette fente. Ces coins sont au nombre de deux par dent, de manière à assurer l'uniformité de la pression radiale, à savoir un coin externe 22 coopérant avec un coin interne 24 (voir figure 2).

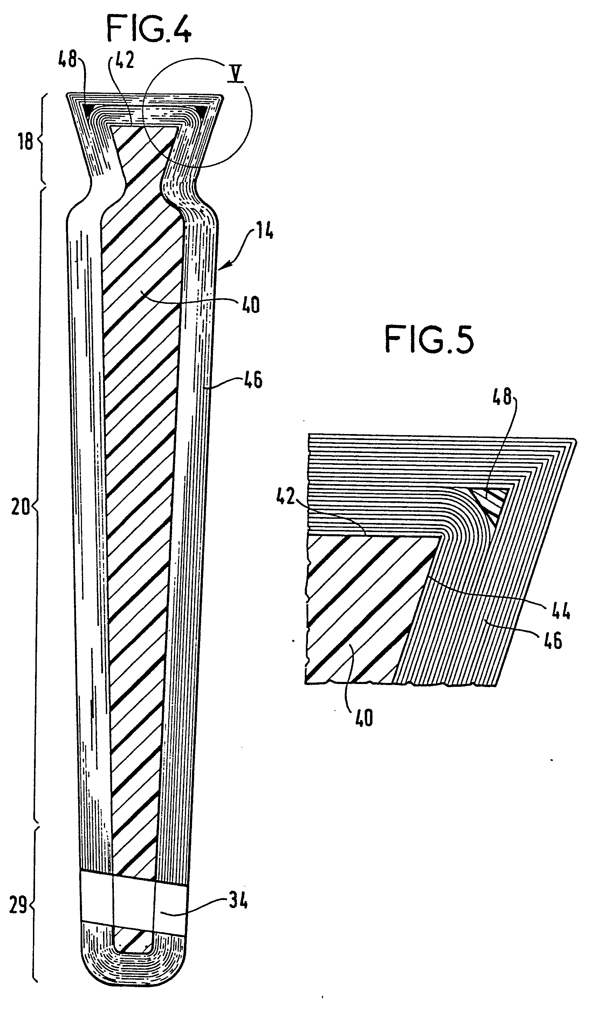

Conformément à la figure 3 un intervalle est ménagé entre deux dents qui se succèdent longitudinalement avec leurs pieds engagés dans une même fente longitudinale, de manière à permettre un enfoncement des coins de calage radial sans démontage des dents. Les coins externes 22 se succèdent longitudinalement sans intervalle et les coins internes 24 peuvent être fixés par un léger collage 26 après enfoncement.

La constitution interne des dents sera décrite plus loin. Elle permet, à l'aide de matériaux électriquement isolants, donc sans pertes électriques, de leur conférer une grande rigidité et une grande résistance mécanique.

Les dents d'accrochage angulairement successives sont alternativement une dent longue 14 et une dent courte 16, les dents longues seules ayant une tête 29 dépassant radialement vers l'intérieur au-delà des barres d'enroulement.

Les moyens de calage tangentiel des barres 12 sont des coins enfoncés radialement vers l'extérieur insérés chacun entre des barres d'enroulement 12 et le flanc d'une dent courte 16.

Les moyens de calage radial des barres 12 comportent des barrettes 30 fixées chacune aux têtes 29 de deux dents longues 14 angulairement successives et s'étendant tangentiellement de l'une à l'autre de ces têtes pour venir appuyer radialement vers l'extérieur sur les faces des barres d'enroulement 12 disposées entre ces deux dents longues.

Les coins à enfoncement radial 28 sont maintenus radialement par les barrettes 30.

Les barrettes 30 sont fixées et calées radialement par des clavettes à pente 32 à enfoncement tangentiel engagées dans des trous 34 des têtes des dents longues 14.

On va maintenant décrire la constitution interne des dents, qui est la même pour les dents longues 14 et les dents courtes 16.

Conformément à l'invention chacune de ces dents comporte :

— un noyau 40 s'étendant sur toute l'extension longitudinale de la dent, une partie de ce noyau étant disposée à l'intérieur du pied 18 de la dent et présentant une face de base 42 parallèle et en regard d'une partie médiane de la grande base du pied 18, et deux faces latérales 44 s'étendant vers le corps 20 de la dent à partir des bords latéraux de cette face de base 42, en se rapprochant progressivement l'une de l'autre,

— et une enveloppe 46 appliquée sur ce noyau, présentant une épaisseur sensiblement constante, et formant au moins la grande base et les deux côtés du pied 18 et les parois latérales du corps 20 de la dent, cette enveloppe étant constituée d'une superposition de couches de tissu d'armature disposées à la fois parallèlement à la direction longitudinale, et, en section par un plan perpendiculaire à cette direction, en suivant les faces de la dent, ces couches étant enrobées d'une résine durcie, de manière à conférer au pied 18 de la dent une résistance importante aux efforts de traction radiale vers l'intérieur, et à conférer à l'ensemble de la dent une résistance importante aux efforts de flexion autour d'axes longitudinaux.

Des inserts rectilignes 48 sont disposés longitudinalement entre deux couches de tissu de l'enveloppe 46 dans chacun des deux angles dièdres formés aux deux bords latéraux de la grande base du pied 18 de manière à éviter un arrondissement excessif de ces deux angles.

Le noyau 40 s'étend d'un seul tenant dans le pied 18 et dans le corps 20 de chaque dent 14, en présentant un minimum d'épaisseur selon la direction tangentielle au voisinage de la petite base du pied 18 de la dent.

Plus précisément, pour la fabrication de dents dont la hauteur totale, mesurée radialement, doit être de l'ordre de 15 à 20 cm, on adopte les dispositions ci-dessous :

Le noyau est en stratifié de mat de verre et de résine époxy. Il est obtenu directement par moulage ou par usinage. Sur ce noyau on a enroulé le nombre de couches de tissu de verre nécessaire pour obtenir une épaisseur simple de 3 mm. Le tissu de verre utilisé est d'un poids moyen de l'ordre de 250 g/m². Il est enroulé dans le sens de la chaîne du tissu en laissant suffisamment de mou pour permettre de l'appliquer ultérieurement facilement contre les flancs concaves du moyen, à la jonction entre le pied et le corps de la dent, malgré son absence d'élasticité. Ce tissu est convenablement traité avec un liquide assurant ultérieurement une bonne liaison mécanique avec la résine d'imprégnation. Un tel liquide ou primaire d'adhérence est généralement appelé « finish » et proposé par la plupart des fournisseurs de résine d'imprégnation.

L'ébauche ainsi préparée est placée dans un moule usiné au profil définitif de la dent, puis l'ensemble est imprégné avec une résine époxy et polymérisé à chaud.

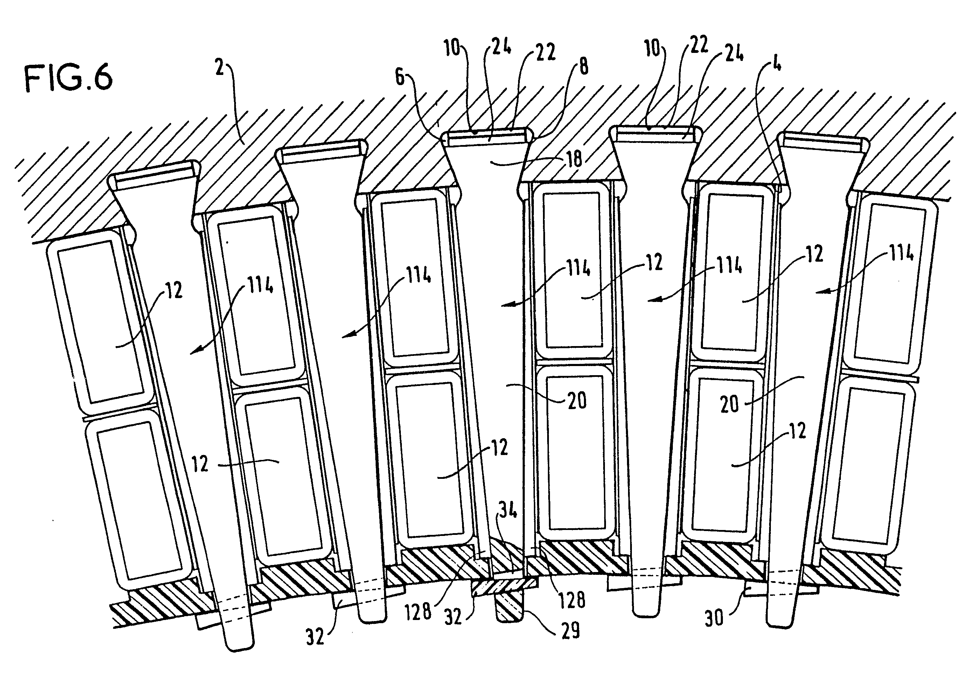

La constitution interne des dents permet d'obtenir les avantages de la présente invention, à savoir bonne tenue mécanique, absence de pertes électriques, et faible encombrement, et ceci indépendamment de la manière dont les barres d'enroulement sont accrochées aux corps de ces dents. Il est par exemple possible sans sortir du cadre de la présente invention d'utiliser conformément à la figure 6, seulement des dents longues 114, dont le profil est aminci pour permettre l'insertion de coins de calage tangentiel 128 entre les flancs de ces dents et les barres 12, le reste du dispositif étant conforme à la description précédente.

**Revendications**

1. Dispositif à dents à queue d'aronde pour fixer les barres d'enroulement statoriques (12) d'une machine électrique tournante dont le rotor tourne autour d'un axe « longitudinal », les barres d'enroulement statoriques (12) étant disposées longitudinalement et réparties angulairement, et étant fixées contre la surface intérieure cylindrique (4) du circuit magnétique statorique par l'intermédiaire de dents (14 ou 16) réparties angulairement, chacune de ces dents ayant la forme générale d'un prisme à génératrices longitudinales et comportant

— un pied (18) dont la section présente la forme générale d'un trapèze ayant une grande base et une petite base disposées selon la direction « tangentielle », avec la petite base vers l'intérieur de la machine, deux côtés reliant ces deux bases,

— et un corps (20) s'étendant selon la direction « radiale » à partir de la petite base dudit trapèze,

— la dent (14) étant accrochée au circuit magnétique statorique (2) par engagement de son pied (18) dans une fente longitudinale (6) dont la section présente une forme correspondant à celle de ce pied et qui est creusée dans la surface interne (4) de ce circuit,

— les barres d'enroulement (12) étant fixées par l'intermédiaire du corps (20) de ces dents qui s'étend radialement vers l'intérieur à partir de la surface interne (4) du circuit magnétique statorique (2),

ce dispositif étant caractérisé par le fait que ces dents (14, 16) comportent chacune

— un noyau s'étendant sur toute l'extension longitudinale de la dent, une partie de ce noyau étant disposée à l'intérieur du pied (18) de la dent et présentant une face de base (42) parallèle et en regard d'une partie médiane de la grande base du pied (18), et deux faces latérales (44) s'étendant vers le corps (20) de la dent à partir des bords latéraux de cette face de base (42), en se rapprochant progressivement l'une de l'autre,

— et une enveloppe (46) appliquée sur ce noyau, présentant une épaisseur sensiblement constante, et formant au moins la grande base et les deux côtés du pied (18) et les parois latérales du corps (20) de la dent, cette enveloppe étant constituée d'une superposition de couches de tissu d'armature disposées parallèlement à la direction longitudinale en suivant les faces latérales de la dent, ces couches étant imprégnées d'une résine durcie, de manière à conférer au pied (18) de la dent une résistance importante aux efforts de traction radiale vers l'intérieur, et à conférer à l'ensemble de la dent une résistance importante aux efforts de flexion autour d'axes longitudinaux.

2. Dispositif selon la revendication 1, caractérisé par le fait que les dents (14, 16) sont munies de coins de calage radial (22, 24) à enfoncement longitudinal disposés contre la grande base du pied (18) de chaque dent (14) de manière à s'insérer entre cette grande base et le fond (10) de la fente (6) dans laquelle ce pied est engagé, à pousser ce pied radialement vers l'intérieur, et à assurer ainsi une compression tangentielle permanente du pied par appui sur les faces latérales de cette fente, et à améliorer ainsi la résistance de la dent auxdits efforts.

3. Dispositif selon la revendication 1, caractérisé par le fait que des inserts rectilignes (48) sont disposés longitudinalement dans chaque dent (14, 16) entre deux couches de tissu de l'enveloppe (46) dans chacun des deux angles dièdres formés aux deux bords latéraux de la grande base du pied (18) de manière à éviter un arrondissement excessif de ces deux angles.

4. Dispositif selon la revendication 1, caractérisé par le fait que le noyau (40) s'étend d'un seul tenant dans le pied (18) et dans le corps de chaque dent (14), en présentant un minimum d'épaisseur selon la direction tangentielle au voisinage de la petite base du pied (18) de la dent.

5. Dispositif selon la revendication 2, caractérisé par le fait qu'un intervalle est ménagé entre deux dents qui se succèdent longitudinalement avec leurs pieds engagés dans une même fente longitudinale (6), de manière à permettre un enfoncement desdits coins de calage radial sans démontage des dents.

6. Dispositif selon la revendication 1, caractérisé par le fait que ledit tissu d'armature est un tissu de verre enroulé dans le sens de la chaîne du tissu.

7. Dispositif selon la revendication 4, caractérisé par le fait que le noyau est constitué d'un mat de verre imprégné de résine durcie.

**Claims**

1. A dovetailed device for fastening stator winding bars (12) of a rotating electric machine, the rotor of which turns around a « longitudinal » axis, the stator winding bars (12) extending longitudinally and being angularly spaced and being fastened to the inner cylindrical surface (4) of the magnetic stator circuit via angularly spaced teeth (14 or 16), each tooth being prismatic with longitudinal generatrices and comprising
— a foot (18) defining generally a trapezium in cross-section having a large and a small base arranged along the « tangential » direction, the small base being directed to the inside of the machine, two flanks connecting said two bases,

— and a body (20) extending along the « radial » direction from the small trapezium base,
— the tooth (14) being fixed to the magnetic stator circuit (2) by engagement of its foot (18) in a longitudinal slot (6) the cross-section of which presents a shape corresponding to that of that foot and which is cut into the inner surface (4) of that circuit,
— the winding bars (12) being fastened through the body (20) of these teeth which extends radially to the inside from the inner surface (4) of the magnetic stator circuit (2),
this device being characterized in that each one of these teeth (14, 16) comprises
— a core which extends over the entire length of the tooth, part of this core being disposed inside the foot of the tooth and presenting a base surface (42) which is parallel to and faces a middle zone of the large foot base (18), and two lateral surfaces (44) which extend towards the body (20) of the tooth from the lateral flanks of that base surface (42) thereby coming progressively closer to each other,
— and a cover (46) applied onto said core and presenting a substantially constant thickness and providing at least the large base and the two flanks of the foot (18) and the lateral walls of the body (20) of the tooth, this cover being constituted by a superposition of fabric sheath layers disposed parallelly to the longitudinal direction along the lateral faces of the tooth, these layers being impregnated by a cured resin so that the foot (18) of the tooth becomes very resistant against traction forces directed radially inwardly, and that the entire tooth assembly becomes very resistant against bending forces acting around longitudinal axes.

2. A device according to claim 1, characterized in that the teeth (14, 16) are provided with radial blocking wedges (22, 24) which are driven longitudinally into the slot and which are disposed against the large base of the foot (18) of each tooth (14) so as to be inserted between this large base and the bottom (10) of the slot (6) in which this foot is engaged, thereby pushing this foot radially inwardly and thus permanently compressing the foot tangentially by pressing against the lateral surfaces of said slot, thereby improving the resistance of this tooth against said forces.

3. A device according to claim 1, characterized in that rectilinear inserts (48) are disposed longitudinally in each tooth (14, 16) between the fabric layers of the cover (46) in each of the two dihedron angles formed at the two lateral edges of the large base of the foot (18) in order to avoid excessive grinding-off at these two edges.

4. A device according to claim 1, characterized in that the core (40) extends in one piece from the foot (18) to the body in each tooth (14) and presents a smallest thickness in the tangential direction close to the small base of the foot (18) of the tooth.

5. A device according to claim 2, characterized in that a gap is provided between two longitudinally successive teeth which have their feet engaged in a common longitudinal slot (6), so as to allow the insertion of said radial blocking wedges without removing the teeth.

6. A device according to claim 1, characterized in that said fabric sheath is a glass fabric wound in the direction of the warp of the fabric.

7. A device according to claim 4, characterized in that the core is constituted by a glass mat impregnated with cured resin.

## Ansprüche

1. Vorrichtung mit schwalbenschwanzförmigen Zähnen zur Befestigung der Statorwicklungsstäbe (12) einer rotierenden elektrischen Maschine, deren Rotor sich um eine « Längs »-achse dreht, wobei die Statorwicklungsstäbe (12) in Längsrichtung angeordnet und winkelmäßig verteilt und über winkelmäßig verteilte Zähne (14 oder 16) an der inneren zylindrischen Oberfläche (4) des Stator-Magnetkreises befestigt sind, wobei jeder dieser Zähne die allgemeine Form eines Prismas mit Mantellinien in Längsrichtung hat und aufweist :

— einen Fuß (18), dessen Querschnitt die allgemeine Form eines Trapezes mit einer großen und einer kleinen Basis aufweist, die gemäß der « Tangential »-Richtung angeordnet sind, mit der kleinen Basis zum Inneren der Maschine hin, wobei zwei Seiten diese beiden Basen verbinden,

— und einen Körper (20), der sich entlang der « Radial »-Richtung ausgehend von der kleinen Basis dieses Trapezes erstreckt,

— wobei der Zahn (14) an dem Stator-Magnetkreis (2) durch Eingriff seines Fußes (18) in einen Längsschlitz (6) befestigt ist, dessen Querschnitt eine Form aufweist, die der dieses Fußes entspricht, und der in die innere Oberfläche (4) dieses Kreises eingearbeitet ist,

— wobei die Wicklungsstäbe (12) über den Körper (20) dieser Zähne befestigt sind, der sich radial nach innen ausgehend von der inneren Oberfläche (4) des Stator-Magnetkreises (2) erstreckt,

dadurch gekennzeichnet, daß diese Zähne (14, 16) je aufweisen :

— einen Kern, der sich über die ganze Längsausdehnung des Zahns erstreckt, wobei ein Teil dieses Kerns sich im Innern des Fußes (18) des Zahns befindet und eine Basisfläche (42) parallel zu und gegenüber einem Mittelteil der großen Basis des Fußes (18) und zwei Seitenflächen (44) aufweist, die sich zum Körper (20) des Zahns hin und ausgehend von den Seitenrändern dieser Basisfläche (42) erstrecken, indem sie sich progressiv einander nähern,

— und eine Hülle (46), die auf diesen Kern aufgelegt ist, die eine im wesentlichen konstante Dicke aufweist und zumindest die große Basis und die zwei Seiten des Fußes (18) und die Seitenwände des Körpers (20) des Zahns bildet, wobei diese Hülle aus einem Übereinanderlegen von Bewehrungsstoffschichten gebildet wird, die parallel zur Längsrichtung entlang den Seitenflächen des Zahns angeordnet sind, wobei diese Schichten mit einem gehärteten Harz getränkt sind, um dem Fuß (18) des Zahns eine große Festigkeit gegen radiale Zugkräfte nach innen zu geben und um der Gesamtheit des Zahns eine große Festigkeit gegen die Biegekräfte um die Längsachsen zu verleihen.

2. Vorrichtung nach Anspruch 1, dadurch gekennzeichnet, daß die Zähne (14, 16) mit längsseitig eingetriebenen Keilen zur radialen Blockierung (22, 24) versehen sind, die gegen die große Basis des Fußes (18) jedes Zahns (14) so angeordnet sind, daß sie sich zwischen diese große Basis und den Boden (10) des Schlitzes (6), in den dieser Fuß eingeführt ist, schieben, diesen Fuß radial nach innen drücken und so eine permanente tangentiale Kompression des Fußes durch Druck auf die Seitenflächen dieses Schlitzes bewirken und so den Widerstand des Zahns gegen die genannten Kräfte verbessern.

3. Vorrichtung nach Anspruch 1, dadurch gekennzeichnet, daß geradlinige Einschübe (48) in Längsrichtung in jedem Zahn (14, 16) zwischen zwei Stoffschichten der Hülle (46) in jedem der beiden Diederwinkel angeordnet sind, die an den beiden Seitenrändern der großen Basis des Fußes (18) gebildet sind, um eine übermäßige Rundung dieser beiden Winkel zu vermeiden.

4. Vorrichtung nach Anspruch 1, dadurch gekennzeichnet, daß der Kern (40) sich aus einem Stück im Fuß (18) und dem Körper jedes Zahns (14) erstreckt und ein Minimum an Dicke entlang der Tangentialrichtung in der Nähe der kleinen Basis des Fußes (18) des Zahns aufweist.

5. Vorrichtung nach Anspruch 2, dadurch gekennzeichnet, daß ein Zwischenraum zwischen zwei Zähnen gelassen ist, die in Längsrichtung aufeinanderfolgen und deren Füße in den gleichen Längsschlitz (6) eingeführt sind, um ein Einführen der radialen Blockierkeile ohne Entfernen der Zähne zu ermöglichen.

6. Vorrichtung nach Anspruch 1, dadurch gekennzeichnet, daß der Bewehrungsstoff ein Glasgewebe ist, das in Richtung der Kette des Gewebes aufgerollt ist.

7. Vorrichtung nach Anspruch 4, dadurch gekennzeichnet, daß der Kern aus einer mit gehärtetem Harz imprägnierten Matte besteht.

FIG.1

0 045 919

# FIG.2

22

24

14

34

# FIG.3

2  22  24  26  22  24

14  14

34  34

0 045 919

## FIG.4

## FIG.5

FIG.6

0 045 919